Europäisches Patentamt

European Patent Office

Office européen des brevets

(11) Publication number: **0 513 444 A1**

## EUROPEAN PATENT APPLICATION

(21) Application number: **91201073.3**

(22) Date of filing: **06.05.91**

(51) Int. Cl.5: **G01D 5/26**

(43) Date of publication of application:
**19.11.92 Bulletin 92/47**

(84) Designated Contracting States:
**AT BE CH DE DK ES FR GB GR IT LI LU NL SE**

(71) Applicant: **TECHNISCHE UNIVERSITEIT DELFT, FACULTEIT DER ELEKTROTECHNIEK**
**P.O.Box 5031**
**NL-2600 GA Delft(NL)**

(72) Inventor: **Smith, Ted**
**Prinsestraat 106a**
**NL-2513 CH Den Haag(NL)**
Inventor: **Huijsing, Johan Hendrik**
**'t Woudt 10**
**NL-2636 HD Schipluiden(NL)**

(74) Representative: **Flamman, Han**
**LIOC Patents and Licensing P.O. Box 85096**
**NL-3508 AB Utrecht(NL)**

(54) Position sensitive device with digital output.

(57) Method to determine the position of an optical position sensitive device - PSD - in a semiconductor, relative to a light source, having electrical contacts at both far ends of the PSD, in the direction in which the position is to be measured, using both currents into which the photo current is divided to both contacts, with the aid of electronic signal conditioning and a device which performs this method, using two position currents generated by the illuminated PSD, and an AD converter in order to obtain the position of the PSD in a digital format, thereby correcting for unwanted electrical and/or optical disturbances with respect to two corresponding position currents generated by the PSD not under illumination.

The invention relates to a method to determine the position of an optical position sensor - Position Sensitive Device (PSD), as described in: J.T.Wallmark, Proc.IRE, 45 (1957) pp.474-483 - in a semiconductor, relative to a light source, having electrical contacts at both far ends of the PSD, in the direction in which the position is measured and in the same of the two semiconducting layers, where

- an electrical reverse bias voltage is applied across the junction of p-type and n-type semiconducting layers;
- both electrical contacts are kept at the same potential

and from the difference between the currents, into which the photo current is divided to both contacts, the position is obtained after electronic signal conditioning.

The method can be applied to one-or more than one-dimensional position measurements. The signals will be processed independently for each dimension, so hereafter only the one dimensional PSD and its signal conditioning will be discussed. The displacements under discussion are in the order of millimeters to centimeters.

The optical position sensor under discussion, in combination with electronic signal conditioning, can be used to measure the position of the sensor relative to a fixed or moving light source. The PSD operates according to the lateral photo-electrical effect in a semiconductor material. The one dimensional PSD comprises of a pn-junction, typically having wide lateral dimensions and with between the p-layer and the n-layer, a reverse biased electrical potential. When the diode, completely or partly, is illuminated, a photo-electrical current, the 'photo-current', will be generated across the junction, which is laterally divided to both contacts, according to a potentiometric relation to the centre of gravity of the coming light. Using electronic signal conditioning, the relative position is determined by a single current or by the difference of both currents, relative to the sum of both currents.

A major problem related to the above optical position measurement is the disturbance of the position currents by additive errors, originating from, among others, ambient illumination, either uniform or non-uniform, pn-junction leakage currents and electrical offset at the input of the signal conditioning circuits. These error sources, and others, cause additive and multiplicative errors in the result of the calculation of the relative position, starting from the two position-currents.

Some errors can be eliminated using the known method of "synchronous detection". This method has been applied for reading PSD's, and is described by Meijer e.a. in: "Sensors and Actuators", Vol.A21-A23 (1990), pp.538-543, taking advantage of the fact that the error sources are of a low frequency nature, or even DC. The light source of the position measurement system is modulated at a frequency higher than that of the error sources. Then the two resulting currents with position-information are led through a filter which attenuates low frequency components. Thus position signals result which have been corrected for some of the before mentioned disturbances. After demodulation of both currents to a low-frequency signal, the are used to calculate the position.

The first drawback of this method is that a complicated signal conditioning is applied, requiring many components, some of which may not be placed on the semiconductor, so that the electronic realisation on the same semiconductor-chip as the position-sensor is not possible. A second drawback is that the before mentioned electrical offset source is not modulated in frequency, and consequently is not eliminated. A third drawback is that this method does not provide a digital output signal.

Another known method, used to reduce only the disturbing influence of the said electrical leakage currents of the PSD, is described by Muro e.a. in: "Sensors and Actuators", Vol.A21-A23 (1990), pp.544-552. Here a second identical, optically shielded PSD is integrated on the same semiconductor material in which the PSD is made. By applying a simple electronic signal conditioning, the two signal-currents of the original PSD are reduced by the corresponding leakage currents from the optically shielded PSD.

The first drawback of this method is that no correction is made for unwanted influences, originating from ambient light, electrical offset etc. A second drawback of this method is the use of a lot of chip space, thereby considerably reducing the availability of chip space for other electronic functions. A third drawback is that this method does not deliver a digital signal either.

Purpose of the invention is to provide a method and a related device, delivering a digitized position signal, corrected for all sources of errors and realised preferably on the sensor chip.

The method according to the invention is characterized in that two position currents, resulting from the illuminated PSD, and an analog-to-digital (AD) converter are used to determine, digitized, the position of the PSD, which may be corrected for unwanted disturbances of electrical and optical nature, using two corresponding position currents, generated by the PSD if the light source is off. In this method the 'photo current' is preferred to be used as an intrinsic reference (comparison) in the analog to digital conversion. In this way there is no need, as in conventional AD converters, to generate the reference signal, consequently resulting in an inherent accurate analog-to-digital conversion.

In addition, according to another characteristic of the method according to the invention, it is preferred to use an interpolating analog-to-digital converter, preferably using the intrinsic reference, to convert the four position currents into a digital representation of the relative position, corrected for any additive error in the position currents. Also an analog-to-digital conversion without error correction is possible, hower only by using two position currents and a light source which is switched on. The analog-to-digital converter can be considered as a modified sigma-delta analog-to-digital converter (or sigma-delta modulator). A sigma-delta modulator is known from IEEE Transactions on Circuits and Systems, Vol.CAS-25 (1978), pp.510-514. The circuit generally consists of at least an adder unit, an integrator (a capacity), a signal-comparator, a clock controlled flip-flop circuit and a 1-bit digital-to-analog (DA) converter. The signal from the DA converter serves as a reference to the analog input signal of the modulator, which is to be digitized. A major difference between the method using the modified sigma-delta converter according to the invention, and the method using the described known sigma-delta modulator, is that in the first mentioned method no external reference signal is used to reference the analog input signal to, but that the 'photo current' is used as an intrinsic reference. In fact, such a novel interpolating AD converter can be used to convert analog-to-digital any potentiometric pair of signals. By 'interpolating' is meant that here is referred to a converter with a memory function, always accumulately using the results of a measurement as a boundary condition to the next measurement, thus all the time improving the accuracy.

According to another preferred characteristic of the method according to the invention, the digital signal is presented in the format of 'successive 1-bit values'. As mentioned before, the resolution of the digital code is enhanced with the accumulation of 1-bit values as time passes. This means that after a short time a rough estimation may be made of the final result, whereas after a longer period of time the final result is determined more accurately. The simplest way to gather the values, is by using a counter, however other digital filters can be applied too.

The invention also comprises a device to perform the above described method, using a PSD in a semiconducting chip etc. Such a device is characterized in that it uses an AD converter to digitize the relative position, and a light source which may be switched 'on' and 'off', so, that the PSD in the position 'off' generates two corresponding currents. The AD converter is preferred to be an interpolating AD converter, and all signal conditioning circuits are preferred to be integrated on the same chip as the PSD. The latter option is made possible because the signal conditioning circuits make very efficient use of semiconductor-material, both in the sense of the number, as well as in the sense of absolute accuracy of the required components: the device may be realized without external components.

In this way, according to the invention, an integrated semiconductor PSD with AD converter and error correction is realized, a so-called 'smart sensor', delivering one or more digital signals which are suitable in a bus-oriented communication with a micro-processor.

An example of an embodiment of the method and the device according to the invention will be explained at the hand of the following descriptions of the drawings, where:

Fig.1    is a schematic block diagram of a possible realization  of the one dimensional PSD and signal conditioning circuits;

Fig.2    is an example of a possible sequence of the integrator's output voltage during eight clock periods, starting from an arbitrary situation and using arbitrary values for the four position currents.

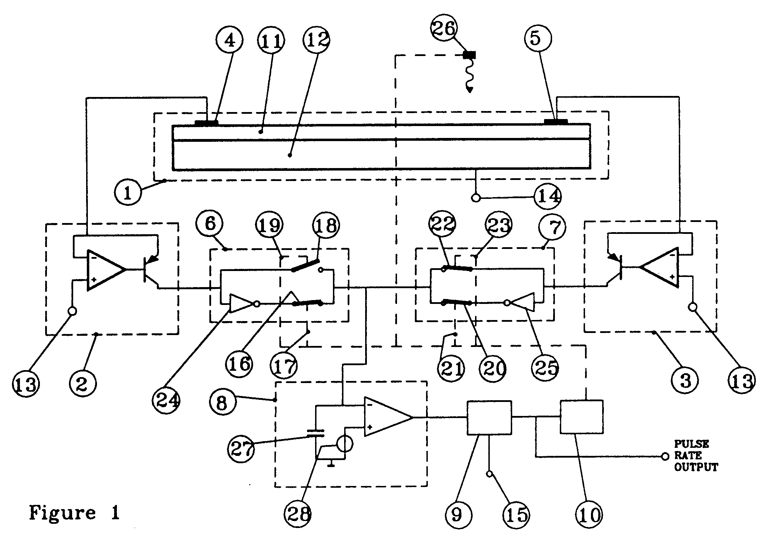

In Fig.1 a possible block diagram of a one dimensional PSD 1 (lateral cross section) with signal conditioning circuits is depicted schematically. In this example the relative position of the light source 26 is determined relative to the centre of the contacts 4 and 5 of the PSD. The signal conditioning circuits consist of two current buffers 2 and 3, two PSD contacts 4 and 5, the current conditioning circuits 6 and 7, the integrator 8, a clock controlled flip-flop 9, control logic 10 and a clock signal 15. The p-type semiconducting layer 11 of the PSD is virtually connected to the bias voltage 13, at the value of for instance half the supply voltage, by means of the current buffers, having differential input stages. The n-type layer 12 is connected to a higher voltage 14, for instance the positive feeding-voltage. Attention should be paid to the fact that the reverse bias voltage over the pn-junction in any case is more negative than the 'build-in voltage' of the pn-junction; as an example, the reverse bias voltage can be set at a negative value of half the supply voltage. The current buffers are applied to provide the virtual connection between the corresponding PSD contact and the bias voltage 13, as well as a low input impedance of the electronic circuit connected to each PSD contact. Besides, the current buffer at its output has the characteristics of a current-source (high output impedance) The amplification factor of the current buffer is of no relevance, and can be equal to one. The desired amplitude of the current buffer's output current can be determined freely, in connection with the maximum photo-current, the value of the capacity 27, the clock period and the supply voltage.

Current conditioning circuit 6 supplies integrator 8 with the current flowing from contact 4 through current buffer 2, inverted by invertor 24 and passed to current selector 16, if selected by control signal 17. Integrator 8 is supplied with the non-inverted current, passed to selector 18, if selected by control signal 19.

Current conditioning circuit 7 supplies integrator 8 with the current flowing from contact 5 through current buffer 3, inverted by invertor 25 and passed to current selector 20, if selected by control signal 21. Integrator 8 is supplied with the non-inverted current, passed to selector 22, if selected by control signal 23.

In all examples of possible realizations of devices, the digitized relative position is determined using two or four different currents, but only one of these currents is supplied to the integrator at the time.

## Example 1

In this example, the digitized relative position, which is corrected for all optical and electrical errors, is calculated, using two pairs of two currents, each pair flowing from one current conditioning circuit. At a rate of half the clock frequency, the integrator output voltage is measured, relative to the reference voltage 28.

If the polarity of the integrator output voltage is negative, the first pair of currents is integrated: the currents from current selector 16 (light source 26 'on') and current selector 18 (light source 26 'off') are being integrated consecutively, both during one clock period. The sequence of integration of these two currents may be reversed.

If the polarity of the integrator output voltage is positive, the second pair of currents is integrated: consecutively the currents from current selector 20 (light source 26 'on') and current selector 22 (light source 26 'off') are being integrated, both during one clock period. The sequence of integration in time may be reversed.

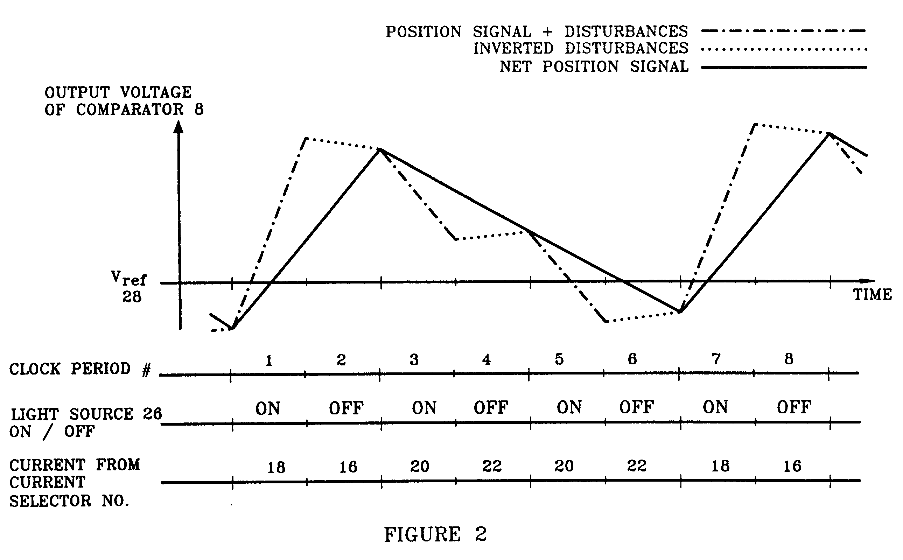

In Fig.2 an example is given of a possible sequence of the integrator's output voltage during eight clock periods, starting from an arbitrary starting value situation and using four arbitrary position currents. In this example the relative position of a light-source is calculated of a light source of which the centre of gravity is closer to contact 4 than to contact 5 (See Fig.1). Besides are indicated which of the position currents are selected and integrated, according to this example. The reference numbers, over the position currents, relate to the corresponding selector, passing the curring to the integrator 8.

The digitized relative position is found by determining the difference ference beween the number of times both current pairs were selected, divided by the sum of both numbers. These numbers are registered during AD conversion, for example by one or more counters, which may or may not be on the chip.

This example leads to the same result if current buffers 2 and 3 are mutually exchanged, and/or if the role of the inverting and non-inverting operations are mutually exchanged. A change of sign of the output code may occur.

## Example 2

In this example, the digitized relative position, which is not corrected for any error, is calculated, using two different currents. At the clock frequency rate, the integrator output voltage is measured, relative to the reference voltage 25.

If the polarity of the integrator output voltage is negative, the current from current selector 16 is selected and integrated during one clock period. If the polarity is positive, the inverted current from selector 20 is selected and integrated during one clock period. The frequency of selections of both currents is registered by one or more counters, in order to calculate therefrom the final result. The light source 26 is switched 'on' permanently.

The digitized relative position signal is obtained by determining the difference between the number of selections of both currents, and to divide that difference by the sum of both numbers.

This example will lead to the same result if current buffers 2 and 3 are mutually exchanged, and/or if the role of the inverting and non-inverting operations are mutually exchanged. A non-essential change of sign of the output code may result.

## Claims

1. Method to determine the position of an optical position sensitive device - PSD - in a semiconducting material, relative to a light source, having electrical contacts at both far ends of the PSD, in the direction in which the position is determined and in the same of two semiconducting layers, where

   - in the pn-structure an electrical reverse bias voltage is applied across the junction of p-type and n-type semiconducting layers;

   - the electrical contacts are kept at the same potential

   and from the difference between the currents, into which the photo-current is divided to both contacts, the position is determined after electronic signal conditioning,

characterized in that using two position currents, resulting from the illuminated PSD, and an analog-to-digital (AD) converter, the digital representation of the position of the PSD is determined, using the photo-current as an intrinsic reference in the analog-to-digital conversion.

2. Method according to claim 1,
characterized in that the unwanted electrical and/or optical disturbances are corrected for, using two corresponding position currents, generated by the non-illuminated PSD.

3. Method according to claim 1 or 2,
characterized in that an interpolating AD converter is used to convert the four position currents.

4. Method according to one of the preceding claims,
characterized in that the digital signal is presented in the format of 'successive 1-bit values'.

5. Device for the realization of the method according to one of the preceding claims, comprising a PSD in a semiconductor, generally with a wide, lateral pn-junction, and with electrical contacts at or near both far sides of the PSD in the direction in which the position is determined, and in the same of two semiconducting layers, and of an electronic signal conditioning circuit,
characterized in that it is cooperating with an AD converter in order to determine the digitized position of the PSD, and that it is cooperating with a light source which can be switched 'on' and 'off', so that in the situation 'off' the PSD generates two corresponding currents.

6. Device according to claim 5,
characterized in that the AD converter is an interpolating AD converter.

7. Device according to claim 5 or 6,
characterized in that the PSD and the electronic signal conditioning circuit are integrated on the same semiconductor chip.

Figure 1

EP 0 513 444 A1

POSITION SIGNAL + DISTURBANCES — · — · — · — · —
INVERTED DISTURBANCES · · · · · · · · · · · · · · · ·
NET POSITION SIGNAL —————

OUTPUT VOLTAGE
OF COMPARATOR 8

$V_{ref}$
28

TIME

| CLOCK PERIOD # | 1 | 2 | 3 | 4 | 5 | 6 | 7 | 8 |
|---|---|---|---|---|---|---|---|---|
| LIGHT SOURCE 26 ON / OFF | ON | OFF | ON | OFF | ON | OFF | ON | OFF |
| CURRENT FROM CURRENT SELECTOR NO. | 18 | 16 | 20 | 22 | 20 | 22 | 18 | 16 |

FIGURE 2

EP 0 513 444 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | 1985 INT.CONF. ON SOLID-STATE SENSORS AND ACTUATORS 1985, pages 57 - 59; KARL J. ERB: 'HIGH RESOLUTION OPTICAL POSITION SENSOR WITH INTEGRATED SIGNAL PROCESSING' * figure 3A * | 1,5 | G01D5/26 |
| D,Y | IEEE TRANSACTIONS ON CIRCUITS AND SYSTEMS vol. 25, no. 7, July 1978, pages 510 - 514; RUDY J. VAN DE PLASSCHE: 'A SIGMA-DELTA MODULATOR AS AN A/D CONVERTER' | 1,5 | |
| A | EP-A-0 183 240 (HONEYWELL INC.) * figure 4 * | 1,5 | |

TECHNICAL FIELDS SEARCHED (Int. Cl.5)

G01D
G01B

The present search report has been drawn up for all claims

| Place of search | Date of completion of the search | Examiner |
|---|---|---|
| THE HAGUE | 10 JANUARY 1992 | LUT K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)